# EUROPÄISCHE PATENTSCHRIFT

(11) **EP 3 380 393 B1**
(45) Veröffentlichungstag und Bekanntmachung des Hinweises auf die Patenterteilung: **26.02.2020**
(21) Anmeldenummer: 16801751.5
(22) Anmeldetag: 23.11.2016
(51) Int. Cl.: B62K 3/10, B62K 5/00

(54) **MEHRSPURIGES FAHRRAD**
MULTITRACK BICYCLE
BICYCLETTE MULTIPISTE

(30) Priorität: 23.11.2015 DE 102015120275
(43) Veröffentlichungstag der Anmeldung: 03.10.2018
(73) Patentinhaber: citkar GmbH, 10319 Berlin (DE)
(72) Erfinder: KREMER, Werner, 53604 Bad Honnef (DE); KREMER, Jonas, 10319 Berlin (DE)
(74) Vertreter: Geskes, Christoph
(86) Internationale Anmeldenummer: PCT/EP2016/078603
(87) Internationale Veröffentlichungsnummer: WO 2017/089429

(56) Entgegenhaltungen:
- WO-A1-2013/106797
- WO-A1-2014/183094
- WO-A1-2015/086984
- DE-U1-202011 001 913
- JP-A- 2010 120 599
- US-A- 1 386 346
- US-A1- 2007 018 416
- US-A1- 2009 236 819
- US-B1- 8 764 040
- Tcworley: "Extreme! 4-Wheel Pedal Bike", , 27. September 2011 (2011-09-27), XP055330939, Gefunden im Internet: URL:https://gearjunkie.com/four-wheel-peda l-bike [gefunden am 2016-12-21]

## Beschreibung

Die Erfindung betrifft ein mehrspuriges Fahrrad und eine Rahmenkonstruktion für ein mehrspuriges Fahrrad.

Aufgrund des steigenden Umwelt- und Gesundheitsbewusstseins gibt es eine erhöhte Nachfrage nach zumindest teilweise durch Körperkraft betriebenen Fahrzeugen, insbesondere in Städten. Aus der Internetveröffentlichung von Tcworley: "Extreme! 4-Wheel Pedal Bike", auf der Seite https://gearjunkie.com/four-wheel-pedal-bike, ist ein Vierrad mit Federung und den Merkmalen der Präambel der unabhängigen Ansprüche 1 und 18 bekannt. Auch aus US 8 764 040 B1 ist ein Vierrad mit Federung bekannt. Ein drei- beziehungsweise vierrädriges pedalbetriebenes Fahrzeug ist aus US 2007/0018416 A1 bekannt. Aus WO 2015/086984 A1 ist ein Antrieb für ein elektrisches Rad insbesondere für Fahrräder und Rollstühle bekannt. Ein Liegerad mit Federung ist aus WO 2013/106797 A1 bekannt. Aus US 2009/0236819 A1 ist ein Fahrrad mit Zahnriemen bekannt. Ferner ist aus US 1 386 346 A ein Fahrzeug für Kinder bekannt. Herkömmliche Zweiräder haben den Nachteil, dass ein Transport von voluminösen und schweren Gütern, beispielsweise ein Lebensmitteleinkauf, insbesondere von Getränkekisten, unsicher ist. Denn beim Anfahren, Halten sowie bei Kurvenfahrten können transportierte Güter zum Kippen eines Zweirades führen. Zwar sind mehrspurige Fahrräder bekannt, diese haben jedoch zumeist einen sehr großen Wendekreis und keine oder nur eine geringe Federung. Derartige Fahrräder sind für eine Fahrt mit Transportgut durch eine Stadt mit engen Kurven, Kopfsteinpflaster, vielen Bordsteine u.Ä. wenig geeignet. Bei den Nutzern treten Rückenprobleme und Unfälle auf. Ferner können transportierte Güter durch Erschütterungen beschädigt werden.

Es ist daher die Aufgabe der vorliegenden Erfindung, ein verbessertes mehrspuriges Fahrrad zur Verfügung zu stellen, dass besonders wendig ist und einen sicheren Transport von Gütern ermöglicht sowie besonders einfach herstellbar, reparierbar, nachrüstbar und leicht ist.

Diese Aufgabe wird erfindungsgemäß durch ein mehrspuriges Fahrrad gemäß Anspruch 1 gelöst. Die Aufgabe wird ferner gelöst durch eine Rahmenkonstruktion für ein mehrspuriges Fahrrad gemäß Anspruch 18.

Das erfindungsgemäße mehrspurige Fahrrad umfasst einen Längsträger, ein Zahnrad, zwei Hinterräder, zwei Hinterradlager, zwei Antriebswellen und eine Aufnahme, wobei die Hinterräder mittels der zwei Hinterradlager voneinander und vom Längsträger axial beabstandet und unabhängig voneinander gelenkig am Längsträger angeordnet sind, wobei die Antriebswellen jeweils sowohl mit dem Zahnrad als auch mit einem Hinterrad in Wirkverbindung stehen und als Gelenkwellen ausgebildet sind, und wobei mittels der Aufnahme das Zahnrad, die zwei Antriebswellen und die zwei Hinterradlager am Längsträger angeordnet sind.

Hierdurch wird ein mehrspuriges Fahrrad mit einer voneinander unabhängigen gelenkigen Lagerung der Hinterräder zur Verfügung gestellt. Unebenheiten im Untergrund führen nicht zu Erschütterungen des gesamten Fahrrads während einer Fahrt. Ferner ist das erfindungsgemäße Fahrrad sehr wendig.

Die Aufnahme weist vorzugsweise zumindest zwei gegenüberliegende Flächen und zwei den gegenüberliegend Flächen entgegengesetzt angeordnete Flächen auf. Die Aufnahme kann einteilig ausgebildet sein, beispielsweise U-förmig. Denkbar ist auch eine mehrteilige Ausbildung aus beabstandet am Fahrrad angeordneten Bauteilen. Die Bauteile können beispielsweise quaderförmig ausgebildet sein. Die Aufnahme ist vorzugsweise aus Metall ausgebildet. Die gegenüberliegenden Flächen weisen jeweils vorzugsweise zumindest eine Durchgangsöffnung zur entsprechend entgegengesetzten Fläche auf. Die Durchgangsöffnungen sind vorzugsweise zueinander fluchtend ausgerichtet, zweckmäßigerweise quer zum Längsträger. Mittels der Durchgangsöffnungen sind das Zahnrad und die zwei Antriebswellen an der Aufnahme anordbar. Hierfür kann die Aufnahme Lager aufweisen, die vorzugsweise in den Durchgangsöffnungen angeordnet sind, beispielsweise Kugellager. Besonders bevorzugt ist das Zahnrad zwischen den gegenüberliegenden Flächen mittels der Durchgangsöffnung der Aufnahme angeordnet. Die zwei Antriebswellen sind vorzugsweise jeweils an den entgegengesetzten Flächen der Aufnahme mittels der Durchgangsöffnungen angeordnet. Die Hinterradlager sind vorzugsweise an den entgegengesetzten Flächen der Aufnahme angeordnet.

Zur Anordnung des Zahnrads, der zwei Antriebswellen und der zwei Hinterradlager am Längsträger ist die Aufnahme vorzugsweise direkt an dem Längsträger angeordnet. Die Anordnung der vorgenannten Bauteile durch die Aufnahme am Längsträger kann auch mittelbar erfolgen. Die Aufnahme kann beispielsweise an einem Bauteil des Fahrrads angeordnet sein, das wiederum am Längsträger angeordnet ist.

Die als Gelenkwellen ausgebildeten Antriebswellen weisen jeweils vorzugsweise zumindest zwei Gelenke auf.

Vorteilhafterweise ist das mehrspurige Fahrrad in Leichtbauweise ausgeführt. Besonders bevorzugt ist der Längsträger zumindest teilweise als quaderförmiger Träger, d.h. mit einem viereckigen Profil, ausgebildet, um eine einfache Anordnung und Ausrichtung der restlichen Bauteile des Fahrrads zu ermöglichen. Denkbar sind auch andere vieleckige Querschnitte, beispielsweise ein sechseckiger Querschnitt. Der Längsträger kann zur Erhöhung der Biegesteifheit auch zumindest teilweise zylinderförmig, d.h. mit einem kreisrunden oder ellipsenförmigen Profil, ausgebildet sein. Der Längsträger kann Abschnitte mit rundem, elliptischem und/oder vieleckigem Querschnitt umfassen. Der Längsträger kann beispielsweise aus einem Rohrprofil aus Metall ausgebildet sein. Alternativ kann ein durch Kohlenfaserstoff verstärkter Kunststoff eingesetzt werden, oder eine Kombination hieraus mit Metall.

Zur Lagerung von Transportgut weist das Fahrrad bevorzugt einen Transportbehälter auf, der an dem Längsträger befestigbar ist. Besonders bevorzugt ist der Transportbehälter als quaderförmiger Behälter ausgebildet. Vorzugsweise werden zur Befestigung mechanische Befestigungsmittel, wie Schrauben und/oder Nieten, verwendet. Um für den Benutzer einen besonders einfach abnehmbaren Behälter bereitzustellen, können auch Rastmittel verwendet werden. Der Transportbehälter kann z.B. aus Blech ausgebildet sein. Alternativ kann Holz oder Kunststoff eingesetzt werden.

Um eine sichere, aber für den Benutzer leicht lösbare Anordnung des Transportbehälters am Fahrrad zu ermöglichen, weist dieses bevorzugt eine Halterung für den Transportbehälter auf. Für eine besonders günstige Gewichtsverteilung ist die Halterung benachbart und/oder zumindest teilweise oberhalb der Aufnahme am Längsträger angeordnet. Die Halterung ist vorzugsweise zumindest teilweise plattenartig ausgebildet, um eine Auflagefläche für den Transportbehälter bereitzustellen. Die Aufnahme kann an der Halterung angeordnet sein. Auch andere Bauteile des Fahrrads können an der Halterung angeordnet sein.

Für einen besonders rückenschonenden Betrieb weist das Fahrrad bevorzugt zwei Hinterradstoßdämpfer auf, wobei die Hinterräder jeweils unabhängig voneinander mittels der Hinterradstoßdämpfer in Bezug auf den Längsträger gedämpft sind. Die Hinterradstoßdämpfer können beispielsweise Metallfedern, Gasfedern und Ähnliches umfassen.

Für eine erhöhte Standsicherheit und Spursicherheit in Kurven sowie zu einer weiteren Erhöhung der Unabhängigkeit von Fahrbahnunebenheiten weist das Fahrrad bevorzugt zwei Vorderräder auf. Die Vorderräder weisen vorzugsweise eine Bereifung auf. Besonders bevorzugt ist die Bereifung breiter als bei herkömmlichen Fahrradreifen ausgebildet, um eine besonders gute Federung zur Verfügung zu stellen. Selbiges gilt entsprechend für die Hinterräder.

Bevorzugt weist das Fahrrad mindestens zwei Vorderradlager auf, wobei die Vorderräder jeweils mittels eines Vorderradlagers voneinander und vom Längsträger axial beabstandet und abhängig voneinander gelenkig am Längsträger angeordnet sind. Die Vorderradlager weisen jeweils vorzugsweise zumindest ein Radlager zur drehbaren Anordnung eines Rads und einen Träger, bevorzugt zwei Träger, besonders bevorzugt vier Träger, zur Beabstandung der Vorderräder auf. Die Hinterradlager können entsprechend den Vorderradlagern ausgebildet sein. Der Träger bzw. die Träger der Hinterradlager können gelenkig mit einem Radlager und der Aufnahme verbunden sein.

Der Träger bzw. die zwei Träger sind vorzugsweise gelenkig mit einem Radlager und mit einer Vorderradaufnahme des Fahrrads verbunden. Der Träger bzw. die Träger können auch direkt mit dem Längsträger des Fahrrads verbunden sein.

Das Fahrrad weist erfindungsgemäß eine Vorderradradaufnahme auf, wobei mittels der Vorderradaufnahme zumindest zwei Vorderradlager und/oder zumindest Vorderradstoßdämpfer am Längsträger angeordnet sind.

Die Vorderradaufnahme weist erfindungsgemäß zumindest einen Abschnitt auf, der den Längsträger umfänglich umschließt. Diese Vorderradaufnahme bzw. der oben genannte Abschnitt derselben ist besonders bevorzugt im Wesentlichen quaderförmig bzw. rechteckig. Der Abschnitt der Vorderradaufnahme ist erfindungsgemäß als Manschette bzw. Klemme ausgebildet. Die Vorderradaufnahme ist derart schnell und einfach austauschbar. Ferner kann die Vorderradaufnahme für eine Reparatur besonders einfach aus- und wieder eingebaut werden. Die Vorderradaufnahme kann mehrteilig ausgebildet sein. Beispielsweise kann die Manschette oder Klemme der Vorderradaufnahme ein Oberteil und ein Unterteil umfassen. Das Oberteil und das Unterteil können beispielsweise als U-Profile ausgebildet sein bzw. als Hälften eines quadratischen Rohres. Das Oberteil und das Unterteil können beispielsweise einen Basisabschnitt mit einer Oberseite und zumindest zwei, bevorzugt mindestens sechs, sich von einer Unterseite des Basisabschnitts in einem rechten Winkel wegerstreckende Seitenabschnitte aufweisen. Der Basisabschnitt ist bevorzugt im Wesentlichen gleich breit wie der Längsträger ausgebildet. Die Seitenabschnitte können zwei einander zugewandte Innenflächen und zwei von den Innenflächen abgewandte Außenflächen aufweisen. Die Vorderradaufnahme kann Befestigungsmittel umfassen. Mittels der Befestigungsmittel können das Oberteil und das Unterteil aneinander und umschließend um den Längsträger befestigt werden. Die Befestigungsmittel können Schrauben und Rastverschlüsse oder Ähnliches umfassen. Mittels der Befestigungsmittel ist auch eine kraftschlüssige Befestigung der Vorderradaufnahme am Längsträger realisierbar. Der Basisabschnitt kann zumindest zwei, vorzugsweise mindestens sechs, seitliche Abstandsabschnitte umfassen, die den Basisabschnitt verbreitern und seitlich vom Längsträger überstehen. Derart können die Seitenabschnitte vom Längsträger beabstandet werden, um einen Bauraum zur Verfügung zu stellen. Die Abstandsabschnitte sind vorzugsweise zur Anordnung der Befestigungsmittel ausgebildet und können beispielsweise Durchgangsbohrungen für Schrauben aufweisen. Die Vorderradaufnahme kann mittels einer formschlüssigen Verbindung, beispielsweise einer Nut-Feder-Verbindung, am Längsträger gesichert sein.

Die Vorderradaufnahme kann wegerstreckende Arme zur beabstandeten Anordnung von Bauteilen aufweisen. Die Vorderradaufnahme weist vorzugsweise zwei abgewinkelte Arme auf. Die Vorderradaufnahme kann zumindest zwei, vorzugsweise zumindest fünf Halteprofile aufweisen. Die Halteprofile können beispielsweise U-Profile umfassen. Die Halteprofile können wie das Oberteil und das Unterteil ausgebildet sein, sind aber bevorzugt schmaler ausgebildet. Die Halteprofile können einen Basisabschnitt mit einer Oberseite und zwei sich von einer Unterseite des Basisabschnitts rechtwinklig wegerstreckende Seitenabschnitte aufweisen. Zwischen den Seitenabschnitten ist zumindest ein Ende eines Trägers einer Radlagers oder eines Stoßdämpfers drehbar anordenbar. Es ist denkbar, dass an den Seitenabschnitten Verlängerungsteile angeordnet sind, um eine von der Unterseite weiter beanstandete Anordnung von Bauteilen zu ermöglichen. Die Verlängerungsteile können beispielsweise an das jeweilige Halteprofil angeschraubt oder angeschweißt sein.

Die Halteprofile sind vorzugsweise länglich ausgebildet, um eine punktuelle Befestigung derselben an mehreren Stellen der Vorderradaufnahme, beispielsweise am Oberteil und am Unterteil, zu ermöglichen. Ferner sind die Halteprofile vorzugsweise länglich ausgebildet, um eine beabstandete Anordnung mehrerer Bauteile an einem Halteprofil zu ermöglichen. Besonders bevorzugt sind an einem Halteprofil zugleich ein Ende eines oberen Trägers und eines unteren Trägers eines Radlagers anordenbar. Die Halteprofile sind besonders bevorzugt in bevorzugt einer Richtung quer zum Längserstreckung des Längsträgers an der Vorderradaufnahme befestigt, so dass mehrere Bauteile, wie Träger, an einem Halteprofil untereinander oder nebeneinander befestigbar sind. Die Halteprofile können mittels Befestigungsmitteln wie Schrauben an der Vorderradaufnahme befestigt sein. Es ist auch denkbar, dass die Halteprofile zumindest teilweise angeschweißt sind. Die Halteprofile können beispielsweise auf einer Oberseite des Oberteils oder des Unterteils der Vorderradaufnahme und/oder an einer Außenfläche der Seitenabschnitte des Oberteils und/oder Unterteils befestigt sein. Ein Halteprofil kann beispielsweise mit einem mittleren Bereich an einer Außenfläche eines Oberteils und mit einem unteren Bereich an einer angrenzenden Außenfläche eines Unterteils der Vorderradaufnahme befestigt sein. Die Halteprofile sind bevorzugt mit deren Oberseite anliegend an der Vorderradaufnahme befestigt, so dass die Seitenabschnitte zur Befestigung weiterer Bauteile zugänglich sind.

Insbesondere zwischen den befestigten Halteprofilen und/oder zwischen angeordneten Befestigungsmitteln kann die Vorderradaufnahme für eine Gewichtsreduktion eine oder mehrere Aussparungen aufweisen.

Es ist denkbar, dass erfindungsgemäße Fahrrad einen Stabilisator umfasst. Der Stabilisator ist bevorzugt an der Vorderradaufnahme und den Vorderradlagern befestigt.

Zur Steuerung des Fahrrads durch einen Fahrer weist diese bevorzugt eine Lenkeinrichtung auf, die zur Übertragung von Lenkbewegungen des Fahrers mit den Vorderradlagern in Wirkverbindung steht. Die Übertragung der Lenkbewegung kann besonders bevorzugt mittels eines Gestänges erfolgen. Denkbar ist auch die Verwendung eines Zugsystems. Die Lenkeinrichtung kann insbesondere anstelle eines üblichen Fahrradlenkers ein Lenkrad umfassen.

Zur Verbesserung der Dämpfung weist das Fahrrad gemäß einer Ausführungsform zumindest zwei Vorderradstoßdämpfer auf, wobei die Vorderräder jeweils unabhängig voneinander mittels eines Vorderradstoßdämpfers in Bezug auf den Längsträger gedämpft sind. Die Vorderraddämpfer sind vorzugsweise gleichbauend, bevorzugt identisch, zu den Hinterradstoßdämpfern ausgebildet.

Zur zumindest teilweisen Entlastung des Fahrers sowie zur Bewältigung besonders schwerer Lasten weist das Fahrrad bevorzugt einen Motor auf. Dieser Motor ist bevorzugt als Elektromotor ausgebildet. Dieser kann beispielweise über die Lenkeinrichtung des Fahrrads steuerbar sein. Alternativ kann der Elektromotor auch als Pedelec-Antrieb ausgebildet sein. Die Geschwindigkeitsregelung kann dann zumindest teilweise mittels einer Treteinrichtung des Fahrrads erfolgen.

Zur Verwendung als Elektrofahrzeug kann das Fahrrad bevorzugt eine Treteinrichtung aufweisen, die modulartig am Fahrrad befestigbar ist. Derart ist sowohl ein Fahrrad als auch ein entsprechendes Elektrofahrzeug kostengünstig herstellbar, da die Treteinrichtung als optionales Modul ausgebildet ist. Anstelle der Treteinrichtung kann das mehrspurige Fahrrad mit dem Elektromotor eine Fußstütze aufweisen.

Bevorzugt ist das Zahnrad als Zahnradscheibe für einen Zahnriemen ausgebildet. Zahnriemen ermöglichen im Vergleich zu herkömmlichen Fahrradketten einen besonders leisen und langlebigen Betrieb. Alternativ kann das Zahnrad auch als herkömmlicher Zahnkranz für eine Fahrradkette ausgebildet sein. Ferner kann das Zahnrad einer Welle zur Anordnung in der Aufnahme und zur Wirkverbindung mit den Antriebswellen zugeordnet sein. Das Fahrrad kann verschiedenste Befestigungsmittel aufweisen, z.B. Schrauben, Rastmittel etc. Ferner kann das Fahrrad verschiedenste Verbindungsmittel zur beweglichen Anordnung von Bauteilen umfassen, beispielsweise Gelenke. Das Fahrrad weist bevorzugt einen Zahnriemen und/oder eine Kette auf. Das Fahrrad weist besonders bevorzugt zumindest zwei Zahnriemen oder Ketten, bzw. einen Zahnriemen und eine Kette, auf, wobei ein Zahnriemen oder eine Kette dem Zahnrad bzw. der Zahnradscheibe zu geordnet ist und ein anderer Zahnriemen bzw. eine andere Kette einer Treteinrichtung des Fahrrads und/oder einem Motor des Fahrrads zugeordnet ist.

Bevorzugt weist das Fahrrad zumindest ein Getriebe auf. Das Getriebe kann zwischen dem Zahnrad und der Treteinrichtung bzw. dem Motor am Längsträger angeordnet sein. Das Getriebe kann ein Gehäuse umfassen. Mittels des Getriebes kann eine Wirkverbindung zwischen den beiden oben beschriebenen Zahnriemen oder Ketten hergestellt werden. Derart ist mittels der beiden Zahnradriemen bzw. Ketten eine Kraftübertragung von der Treteinrichtung beziehungsweise von dem Motor über das Getriebe auf die Hinterräder realisierbar. Das Getriebe kann mit einer Schalteinrichtung in Werkverbindung stehen, damit der Fahrer die Kraftübertragung regulieren kann. Die Schalteinrichtung ist bevorzugt an der Lenkeinrichtung bzw. am Lenkrad des Fahrrads ausgebildet. Die Schalteinrichtung kann alternativ am Längsträger angeordnet sein. Die Schalteinrichtung kann als Gangschaltung ausgebildet sein.

Das Getriebe kann alternativ oder ergänzend auch als Differentialgetriebe ausgebildet sein, um eine verbesserte Spursicherheit des Fahrrads in Kurven zur Verfügung zu stellen. Das Differentialgetriebe ist bevorzugt dem Zahnrad zugeordnet, bzw. umfasst dieses. Das Differentialgetriebe kann mittels der Aufnahme am Längsträger angeordnet sein. Die Wirkverbindung zwischen dem Zahnrad und den Antriebswellen kann über das Differentialgetriebe erfolgen. Die Antriebswellen können derart jeweils unterschiedliche Drehzahlen auf die Hinterräder übertragen. Das Differentialgetriebe steht bevorzugt in Wirkverbindung mit der Lenkreinrichtung, so dass eine Drehzahlregelung der einzelnen Antriebswellen entsprechend den Lenkbewegungen des Fahrers erfolgen kann. Die Wirkverbindung zwischen Differentialgetriebe und der Lenkeinrichtung ist bevorzugt mittels eines Gestänges realisierbar. Denkbar ist auch ein Zugsystem.

Der Längsträger erstreckt sich vorzugsweise von der Aufnahme durchgängig bis zum vorderen Bereich des Fahrrads, und ist beispielsweise bis zu den Vorderrädern ausgebildet.

Besonders bevorzugt weist das Fahrrad, abweichend von einem herkömmlichen Fahrradsattel, einen Sitz mit Rückenlehne auf. Der Sitz ist bevorzugt am Längsträger angeordnet. Dieser Sitz ist vorzugsweise gepolstert. Der Sitz kann drehbar am Längsträger angeordnet sein, um ein einfaches Einsteigen des Benutzers zu ermöglichen. Der Sitz ist besonders bevorzugt höhenverstellbar und/oder verschiebbar am Längsträger angeordnet, so dass dieser an verschiedene Körpergrößen des Benutzers anpassbar ist. Der Sitz kann eine Halterung aufweisen, die eine drehbare, höhenverstellbare und/oder verschiebbare Anordnung des Sitzes am Längsträger ermöglicht. Der Sitz bzw. die Halterung kann zweckmäßigerweise arretierbar ausgebildet sein.

Das erfindungsgemäße mehrspurige Fahrrad kann alternativ nicht die beschriebene (Hinterrad-)Aufnahme und daran angeordnete Bauteile wie ein Zahnrad, zwei Hinterräder, zwei Hinterradlager und zwei Antriebswellen aufweisen.

Das erfindungsgemäße mehrspurige Fahrrad kann alternativ einen Längsträger, zumindest zwei Vorderräder, zwei Vorderradlager und eine Vorderradaufnahme aufweisen, wobei mittels der Vorderradaufnahme die zwei Vorderradlager angeordnet sind.

Alternativ oder ergänzend können mittels der Vorderradaufnahme zumindest zwei Vorderradstoßdämpfer am Längsträger angeordnet sein. Der Längsträger, die Vorderradlager, die Stoßdämpfer können wie bereits oben beschrieben ausgebildet und im Fahrrad angeordnet sein. Zudem kann das alternative Fahrrad die weiteren Bauteile wie oben beschrieben aufweisen, beispielsweise eine Lenkeinrichtung und Vorderräder.

Die erfindungsgemäße Rahmenkonstruktion für ein mehrspuriges Fahrrad umfasst mindestens einen Längsträger, ein Zahnrad, zwei Hinterradlager, zwei Antriebswellen und eine Aufnahme, wobei Hinterräder mittels der zwei Hinterradlager voneinander und vom Längsträger axial beabstandet und unabhängig voneinander gelenkig am Längsträger anordbar sind, wobei die Antriebswellen als Gelenkwellen ausgebildet sind, und wobei mittels der Aufnahme das Zahnrad, die zwei Antriebswellen und die zwei Hinterradlager am Längsträger angeordnet sind.

Bevorzugt weist die Rahmenkonstruktion einen Transportbehälter auf, der an dem Längsträger befestigt ist.

Bevorzugt weist die Rahmenkonstruktion eine Halterung für den Transportbehälter auf, wobei die Halterung benachbart und/oder zumindest teilweise oberhalb der Aufnahme angeordnet ist.

Bevorzugt weist die Rahmenkonstruktion zwei Hinterradstoßdämpfer auf, um zwei Hinterräder jeweils unabhängig voneinander in Bezug auf den Längsträger zu dämpfen.

Die Rahmenkonstruktion weist bevorzugt zumindest zwei Vorderradlager auf, um zwei Vorderräder jeweils voneinander und vom Längsträger axial beabstandet und unabhängig voneinander gelenkig am Längsträger anzuordnen.

Bevorzugt weist die Rahmenkonstruktion eine Lenkeinrichtung auf, die zur Übertragung von Lenkbewegungen eines Fahrers mit den Vorderradlagern in Wirkverbindung steht.

Die Rahmenkonstruktion weist bevorzugt zumindest zwei Vorderradstoßdämpfer auf, um zwei Vorderräder jeweils unabhängig voneinander in Bezug auf den Längsträger zu dämpfen.

Die Rahmenkonstruktion weist erfindungsgemäß eine Vorderradradaufnahme auf, wobei mittels der Vorderradaufnahme zumindest zwei Vorderradlager und/oder zumindest zwei Vorderradstoßdämpfer am Längsträger angeordnet sind.

Die Vorderradaufnahme weist erfindungsgemäß zumindest einen Abschnitt auf, der den Längsträger umfänglich umschließt.

Der Abschnitt der Vorderradaufnahme ist vorzugsweise als Manschette bzw. Klemme ausgebildet.

Die vorgenannten Bauteile der Rahmenkonstruktion können wie die in Bezug auf das erfindungsgemäße Fahrrad beschriebenen Bauteile ausgebildet sein.

Die erfindungsgemäße Rahmenkonstruktion kann alternativ nicht die beschriebene (Hinterrad-)Aufnahme und daran angeordnete Bauteile wie ein Zahnrad, zwei Hinterradlager und zwei Antriebswellen aufweisen.

Die erfindungsgemäße Rahmenkonstruktion kann alternativ einen Längsträger, zumindest zwei Vorderradlager und eine Vorderradaufnahme aufweisen, wobei mittels der Vorderradaufnahme die zwei Vorderradlager angeordnet sind.

Alternativ oder ergänzend können mittels der Vorderradaufnahme zumindest zwei Vorderradstoßdämpfer am Längsträger der Rahmenkonstruktion angeordnet sein. Der Längsträger, die Vorderradlager, die Stoßdämpfer können wie bereits oben beschrieben ausgebildet und angeordnet sein.

Zudem kann die alternative Rahmenkonstruktion die weiteren Bauteile wie oben beschrieben aufweisen, beispielsweise eine Lenkeinrichtung.

Weitere vorteilhafte Ausgestaltungen gehen aus den nachfolgenden Zeichnungen hervor. Die dort dargestellten weiteren Abbildungen sind jedoch nicht beschränkend auszulegen, vielmehr können die dort beschriebenen Merkmale untereinander mit den oben beschriebenen Merkmalen zur weiteren Ausgestaltung kombiniert werden. Des Weiteren sei darauf verwiesen, dass die in der Figurenbeschreibung angegebenen Bezugszeichen den Schutzbereich der vorliegenden Erfindung nicht beschränken, sondern lediglich in den Figuren gezeigten Ausführungsformen verweisen. Gleiche Teile und Teile mit gleicher Funktion weisen im Folgenden die gleichen Bezugszeichen auf. Es zeigen:
Fig. 1 eine perspektivische Hinteransicht einer Ausführungsform des erfindungsgemäßen mehrspurigen Fahrrads mit der erfindungsgemäßen Rahmenkonstruktion;
Fig. 2 eine Unteransicht eines vergrößerten Ausschnitts der Ausführungsform gemäß Fig. 1;
Fig. 3 einen vergrößerten Ausschnitt der Ausführungsform gemäß Fig. 1 in vergrößerter perspektivischer Frontansicht;
Fig. 4 einen Ausschnitt einer Vorderradaufnahme gemäß einer zweiten Ausführungsform in perspektivischer Vorderansicht; und
Fig. 5 einen Ausschnitt gemäß Fig. 4 in perspektivischer Rückansicht.

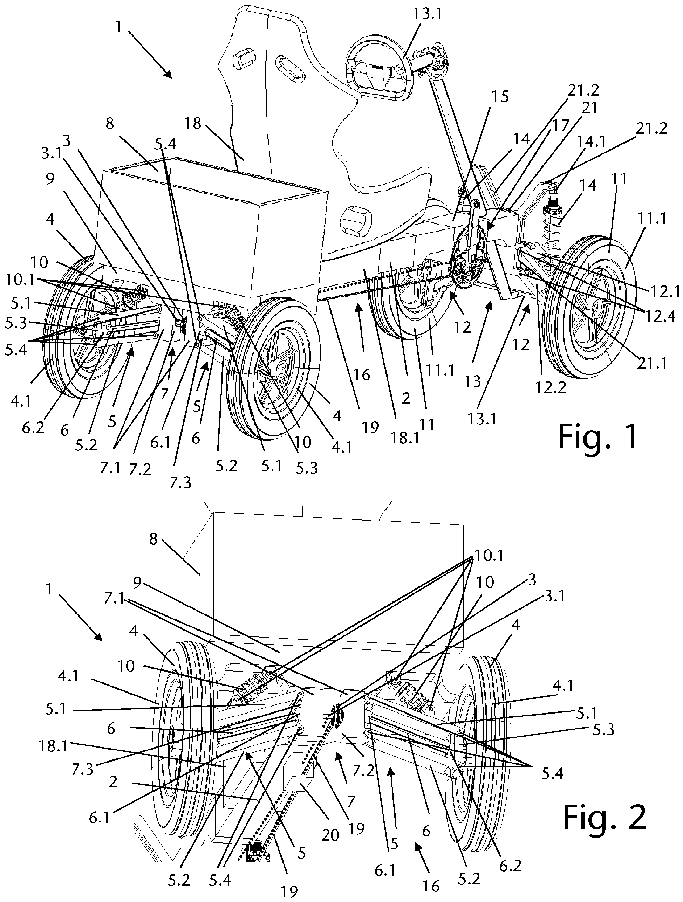

Wie in Fig. 1 gezeigt, weist das Fahrrad 1 einen Längsträger 2, ein Zahnrad 3, zwei Hinterräder 4, zwei Hinterradlager 5, zwei Antriebswellen 6 und eine Aufnahme 7 auf, wobei die Hinterräder 4 mittels zwei Hinterradlagern 5 voneinander und vom Längsträger 2 axial beabstandet und unabhängig voneinander gelenkig am Längsträger 2 angeordnet sind. Die Antriebswellen 6 stehen jeweils sowohl mit dem Zahnrad 3 als auch mit einem Hinterrad 4 in Wirkverbindung und sind als Gelenkwellen ausgebildet.

Die Aufnahme 7 umfasst zwei quaderförmige Bauteile 7.1 mit einander zugewandten bzw. gegenüberliegenden Flächen 7.2 und diesen entgegengesetzten Flächen 7.3. Die Bauteile 7.1 weisen jeweils eine Durchgangsöffnung auf, die jeweils von einer gegenüberliegenden Fläche 7.2 bis zur jeweilig entgegengesetzten Fläche 7.3 eines Bauteils 7.1 ausgebildet ist. Zwischen den gegenüberliegenden Flächen 7.2 ist das Zahnrad 3 angeordnet. Hierfür ist das Zahnrad 3 einer Welle 3.1 zugeordnet. Diese ist zumindest teilweise innerhalb der Durchgangsöffnungen der Bauteile 7.1 angeordnet. Das Fahrrad 1 weist ferner einen quaderförmigen Transportbehälter 8 und eine plattenartige Halterung 9 für diesen auf.

Die Aufnahme 7 ist detailliert in Fig. 2 gezeigt. Die Halterung 9 ist oberhalb der Aufnahme 7 am Längsträger 2 angeordnet. Die Aufnahme 7 ist an der Halterung 9 mittelbar am Längsträger 2 des Fahrrads 1 befestigt. Die Antriebwellen 6 sind über die Welle 3.1 mit dem Zahnrad 3 verbunden. Hierfür weisen diese erste endseitige Gelenke 6.1 auf. Mittels zweiten endseitigen Gelenken 6.2 sind die Antriebswellen 6 mit den zwei Hinterrädern 4 verbunden. Die Hinterradlager 5 weisen jeweils einen oberen Träger 5.1 und einen unteren Träger 5.2, ein Radlager 5.3 und vier Gelenke 5.4 auf. Die Gelenke 5.4 sind jeweils endseitig an den Trägern 5.1 angeordnet. Der obere Träger 5.1 und der untere Träger 5.2 sind übereinander und beabstandet mittels den Gelenken 5.4 an den entgegengesetzten Flächen 7.3 der Aufnahme 7 und an der jeweiligen Radlager 5.3 angeordnet. Die Antriebwellen 6 verlaufen jeweils zwischen den Trägern 5.1. und 5.2.

Das Fahrrad weist zudem zwei Hinterradstoßdämpfer 10 auf. Diese umfassen jeweils zwei endseitige Gelenke 10.1. Mittels diesen sind die Hinterradstoßdämpfer 10 zwischen der Halterung 9 und den oberen Trägern 5.1 angeordnet.

Ebenfalls weist das Fahrrad 1 zwei Vorderräder 11 sowie zwei Vorderradlager 12 auf. Im Weiteren umfasst das Fahrrad 1 eine Lenkeinrichtung 13, die zur Übertragungen von Lenkbewegungen eines Fahrers mit den Vorderradlagern 12 in Wirkverbindung steht. Diese Lenkeinrichtung 13 umfasst ein Lenkrad 13.1. Ferner umfasste die Lenkeinrichtung 13 ein Gestänge 13.2 mittels welchem diese mit den Vorderradlagern 12 verbunden ist. Die Vorderräder 11 weisen eine breite Bereifung 11.1 auf. Auch die Hinterräder 4 weisen eine breite Bereifung 4.1 auf.

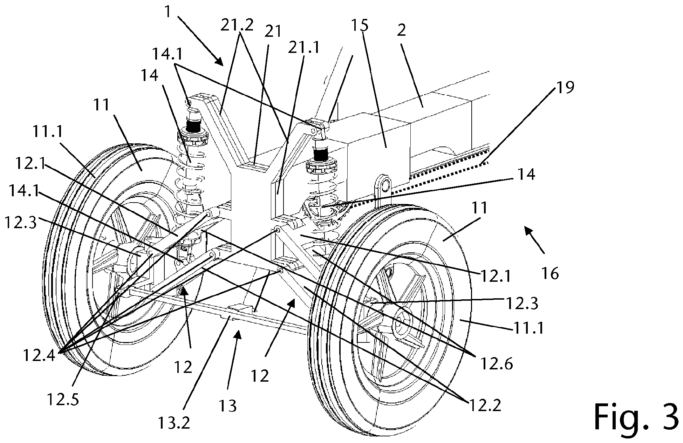

Das Fahrrad 1 weist außerdem, wie in Fig. 3 detailliert dargestellt, zwei Vorderradstoßdämpfer 14 auf, wobei die Vorderräder 11 jeweils unabhängig voneinander mittels eines Vorderradstoßdämpfers in Bezug auf den Längsträger 2 gedämpft sind. Das Fahrrad 1 weist einen Motor 15 auf, der als Elektromotor zum Pedelec-Antrieb ausgebildet ist.

Das in den Fig. 1 bis 3 gezeigte Fahrrad 1 umfasst auch eine Ausführungsform der erfindungsgemäßen Rahmenkonstruktion 16. Diese umfasst den Längsträger 2, das Zahnrad 3, die zwei Hinterradlager 5, zwei die Antriebswellen 6 und die Aufnahme 7.

Das Fahrrad 1 weist weiterhin eine Treteinrichtung 17 sowie einen Sitz 18 für den Fahrer auf. Der Sitz ist mittels einer Halterung 18.1 verschieblich auf dem Längsträger 2 angeordnet. Die Halterung 18. 1 ist auf dem Längsträger arretierbar.

Das Fahrrad 1 weist zwei Zahnriemen 19 auf. Das Zahnrad 3 ist entsprechend als Zahnradscheibe für Zahnradriemen ausgebildet. Das Fahrrad 1 weist ferner ein Getriebe 20 auf. Mittels der beiden Zahnradriemen 19 findet eine Kraftübertragung von der Treteinrichtung 17 beziehungsweise von dem Motor 15 über das Getriebe 20 auf die Hinterräder 4 statt.

Die Vorderradstoßdämpfer 11 und die Vorderradlager 12 sind mittels einer Vorderradaufnahme 21 am Längsträger 2 angeordnet. Die Vorderradlager 12 weisen jeweils einen oberseitigen Träger 12. 1, einen unterseitigen Träger 12.2, ein Radlager 12.3, vier Gelenke 12.4 und ein Befestigungsteil 12.5 auf. Das Gestänge 13.2 der Lenkeinrichtung 13 ist mittels den Befestigungsteilen 12.5 mit den Radlagern 12.3 der Vorderradlager 12 verbunden.

Die Gelenke 12.4 sind jeweils endseitig an den Trägern 12.1 und 12.2 angeordnet. Mittels den Gelenken 12.4 sind die Träger 12.1 und 12. 2 jeweils mit einem Radlager 12.3 und einer Seitenfläche 21.1 der im Wesentlichen quaderförmigen Vorderradaufnahme 21 verbunden. Die Vorderradaufnahme 21 weist zwei angewinkelte Arme 21.2 auf. Die Vorderradstoßdämpfer 14 weisen jeweils zwei endseitige Gelenke 14.1 auf. Mittels diesen sind die Vorderradstoßdämpfer 14 jeweils mit einem angewinkelten Arm 21.2 und einem unteren Träger 12.2 verbunden. Die oberen Träger 12.1 weisen jeweils eine Durchgangsöffnung 12.6 für die Vorderradstoßdämpfer 14 auf.

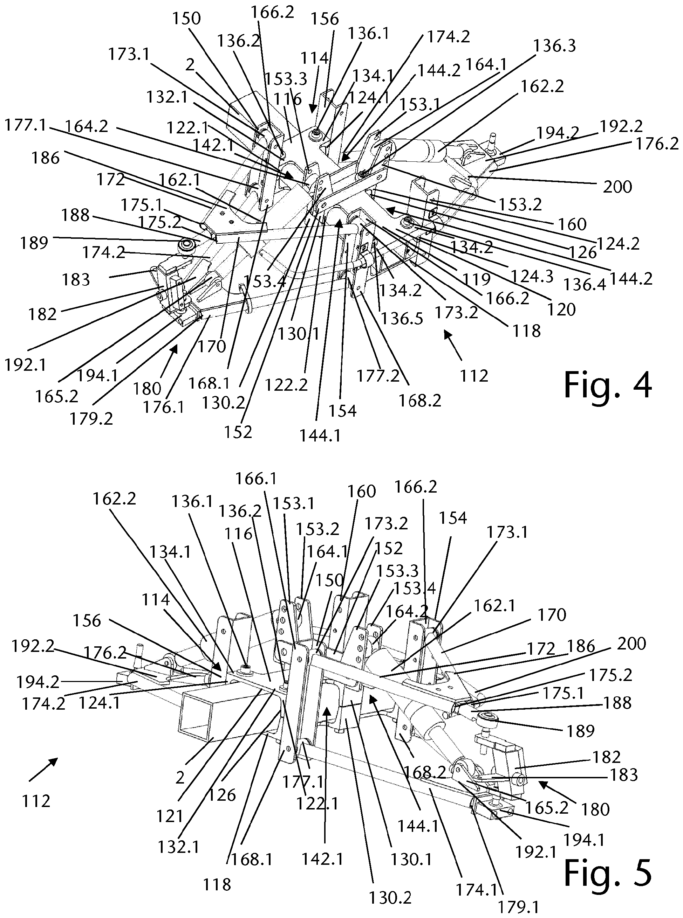

Fig. 4 und Fig. 5 zeigen eine zweite Ausführungsform eines mehrspurigen Fahrrads 1, die sich von der ersten, in den vorherigen Figuren gezeigten Ausführungsform darin unterscheidet, dass diese eine alternative Vorderradaufnahme 112 aufweist. Die Vorderradaufnahme 112 umfasst eine im Wesentlichen quaderförmige Manschette 114, die den Längsträger 2 umschließt. Die Manschette 114 umfasst ein U-förmiges Oberteil 116 und ein U-förmiges Unterteil 118. Das Oberteil 116 umfasst einen Basisabschnitt 119 mit einer Oberseite 120 und einer Unterseite 121 sowie drei Paar sich von der Unterseite 121 in einem rechten Winkel wegerstreckender Seitenabschnitte 122, 124. In Fig. 4 und 5 sind von sechs lediglich fünf Seitenabschnitte 122.1, 122.2, 122.3, 124.1, 124.2 zu sehen. Die Seitenabschnitte 122, 124 weisen jeweils eine Innenfläche 126, 128 auf, die der Innenfläche 126, 128 des jeweils anderen Seitenabschnitts 122, 124 gegenüberliegt. Ferner weisen die Seitenabschnitte 122, 124 jeweils eine Außenfläche 130.1 auf, die von der Innenfläche 126, 128 des jeweiligen Seitenabschnitts 122, 124 abgewandt ist. In den Fig. 4 und Fig. 5 ist nur die Außenfläche 130.1 des mittleren Seitenabschnitts 122.2 zu erkennen. Zwischen der Innenfläche 126 und der Außenfläche 130.1 eines Seitenabschnitts 122, 124 ist vom Basisabschnitt 119 beabstandet eine Kopffläche zur Anordnung einer weiteren Kopffläche des baugleichen Unterteils 118 ausgebildet. Der Basisabschnitt 119 des Oberteils 116 umfasst drei Paar Abstandsabschnitte 132, 134, die zwischen dem Basisabschnitt 119 und den Seitenabschnitten 122, 124 angeordnet sind, und welche den Längsträger 2 seitlich überstehen. In Fig. 4 und Fig. 5 sind nur die zwei äußeren Paare der Abstandsabschnitte 132.1, 132.2, 134.1, 134.2 gezeigt.

Das Unterteil 118 ist wie das Oberteil 116 ausgebildet, aber spiegelbildlich bzw. um 180° gedreht zum Oberteil 116 in der Vorderradaufnahme 112 angeordnet, wobei die Außenflächen 130.2 des Unterteils 118 mit den Außenflächen 130.1 des Oberteils 116 fluchten und aneinander angrenzen. Die Abstandsabschnitte 132, 134 des Oberteils 116 und die des Unterteils 118 weisen jeweils eine nicht dargestellte Durchgangsbohrung für eine Schraube auf. Von den sechs Abstandsabschnitten 132, 134 des Oberteils 116 erstreckt sich jeweils eine Schraube 136 zum Unterteil 118 zur Verbindung des Unterteils 118 mit dem Oberteil 116. In Fig. 4 und Fig. 5 sind fünf der sechs Schrauben 136.1, 136.2, 136.3, 136.4, 136.5 gezeigt. Eine der mittleren Schraube 136.3 gegenüberliegende weitere mittlere, sechste Schraube ist nicht zu erkennen. Zwischen den Abstandsabschnitten 132, 134 sind Aussparungen 142, 144 ausgebildet. Im Bereich der Schrauben 136 fluchten die Außenflächen 130.1, 130.2 der Vorderradaufnahme 112 und bilden drei linksseitige durchgehende Außenflächen und drei rechtsseitige durchgehende Seitenflächen.

An der Vorderradaufnahme 112 sind fünf Halteprofile 150, 152, 154, 158, 160 befestigt. An der Oberseite 120 des Basisabschnitts 119 des Oberteils 116 und überdeckend auf den mittleren, nicht gezeigten Abstandsabschnitten mit den mittleren Schrauben 136.3 ist ein U-förmiges Halteprofil 152 mit vier Verlängerungsteilen 153. 1, 153.2, 253.3, 153.4 für zwei Vorderradstoßdämpfer befestigt. Erste Enden 164.1, 164.2 zweier Stoßdämpfer 162.1, 162.2 sind drehbar an jeweils zwei Verlängerungsteilen 153.1, 153.2, 153.3, 153.4 des Halteprofils 152 befestigt.

In der Nähe der äußeren vier Schrauben 136.1, 136.2, 136.4, 136.5 ist jeweils an den Außenflächen 130.1, 130.2 der Vorderradaufnahme 112 eines der weiteren vier Halteprofile 150, 154, 156, 160 zur Anordnung von Trägern eines Vorderradlagers befestigt. Diese überdecken dort die Außenflächen 130.1, 130.2. Die vier Halteprofile 150, 154, 156, 160 sind als längliche U-förmige Profile ausgebildet und paarweise gegenüberliegend angeordnet, wobei jeweils ein mittlerer Bereich des Halteprofils 150, 154, 156, 160 an einer der Außenflächen 130.1 des Oberteils 116 und ein unterer Bereich des Halteprofils 150, 154, 156, 160 an einer der angrenzenden Außenflächen 130.2 des Unterteils 118 befestigt ist. An den Halteprofilen 150, 154 sind Träger 170, 172, 174.1, 176.1 eines Vorderradlagers 180 an der Vorderradaufnahme 112 befestigt.

Das Vorderradlager 180 umfasst ein Radlager 182 und zwei oberseitige rohrförmige Träger 170, 172, zwei unterseitige rohrförmige Träger 174.1, 176.1 und ein Befestigungsmittel 183 für eine Lenkeinrichtung auf. Die beiden oberseitigen Träger 170, 172 weisen erste Enden 173.1, 173.2 auf, die an oberen Enden 166.1, 166. 2 der Halteprofile 150, 154 drehbar befestigt sind. Die nicht an der Vorderradaufnahme befestigten zweiten Enden 175.1, 175.2 der oberseitigen Träger 170, 172 laufen spitz aufeinander zu. Die beiden oberseitigen Träger 170, 172 bilden bildlich gesprochen die Schenkel eines, bevorzugt etwa gleichschenkligen, Dreiecks. Die zweiten Enden 175.1, 175.2 sind mit einer im Wesentlichen dreieckigen Platte 186 und mit einem rohrförmigen Abstandshalter 188 verbunden, der ist ein erstes Lager 190 zur drehbaren Lagerung des Radlagers 182 umfasst.

Die zwei unterseitigen rohrförmigen Träger 174.1, 176 .1 sind länger als die oberseitigen Träger 170, 172 ausgebildet, ansonsten aber ähnlich ausgebildet. Die ersten Enden 177.1, 177.2 der unterseitigen Träger 174.1, 176.1 sind an unteren Enden 168.1, 168.2 der linken Halteprofile 150, 154 der Vorderradaufnahme 112 drehbar befestigt. Die zweiten Enden 179.1, 179.2 der unterseitigen Träger 174.1, 176.1 sind mit einer im Wesentlichen dreieckigen Platte 192.1 und einem zweiten Lager 194.1 zur drehbaren Lagerung des Radlagers 182 verbunden. Auf der dreieckigen Platte 192.1 ist ein zweites Ende 165.2 des Stoßdämpfers 162.1 drehbar befestigt. Zwischen dem ersten Lager 190 und dem zweiten Lager 194.1 ist das Radlager 182 angeordnet, welches die oberseitigen Träger 170, 172 und die unterseitigen Träger 174.1, 176.2 miteinander verbindet.

An den weiteren Halteprofilen 156, 160 sind die gleichen Bauteile des Vorderradlagers angeordnet bei den Halteprofilen 150, 154. Zur Vereinfachung ist in Fig. 4 und Fig. 5 nur ein Vorderradstoßdämpfer 162.2, zwei unterseitige Träger 174.2, 176.2 mit dreieckiger Platte 192.2 und das Lager 194.2 angezeigt.

Die Vorderradaufnahme 112 weist außerdem einen Stabilisator 200 auf, der an dem vorderen linken und rechten Halteprofil 154, 160 befestigt ist.

## Patentansprüche

1. Mehrspuriges Fahrrad (1) umfassend mindestens einen Längsträger (2), ein Zahnrad (3), zwei Hinterräder (4), zwei Hinterradlager (5), zwei Antriebswellen (6) und eine Aufnahme (7), wobei die Hinterräder (4) mittels der zwei Hinterradlager (5) voneinander und vom Längsträger (2) axial beabstandet und unabhängig voneinander gelenkig am Längsträger (2) angeordnet sind, wobei die Antriebswellen (6) jeweils sowohl mit dem Zahnrad (3) als auch mit einem Hinterrad (4) in Wirkverbindung stehen und als Gelenkwellen ausgebildet sind, und wobei mittels der Aufnahme (7) das Zahnrad (3), die zwei Antriebswellen (6) und die zwei Hinterradlager (5) am Längsträger (2) angeordnet sind, wobei das Fahrrad (1) eine Vorderradradaufnahme (21, 121) aufweist, wobei mittels der Vorderradaufnahme (21, 121) zumindest zwei Vorderradlager (12, 112) und/oder zumindest zwei Vorderradstoßdämpfer (14, 114) am Längsträger (2) angeordnet sind, **dadurch gekennzeichnet, dass** die Vorderradaufnahme (21, 121) zumindest einen Abschnitt aufweist, der den Längsträger (2) umfänglich umschließt, und wobei der Abschnitt als Manschette beziehungsweise Klemme (114) ausgebildet ist.

2. Fahrrad (1) gemäß Anspruch 1, **dadurch gekennzeichnet, dass** die Manschette (114) ein Oberteil (116) und ein Unterteil (118) mit jeweils einem Basisabschnitt (119) mit einer Oberseite (120) und zumindest zwei sich von einer Unterseite (121) des Basisabschnitts (119) in einem rechten Winkel wegerstreckenden Seitenabschnitten (122, 124) umfasst.

3. Fahrrad (1) gemäß Anspruch 2, **dadurch gekennzeichnet, dass** der Basisabschnitt (119) zumindest zwei seitliche Abstandsabschnitte (132, 134) umfasst, die den Basisabschnitt (119) seitlich verbreitern und seitlich vom Längsträger (2) überstehen.

4. Fahrrad (1) gemäß Anspruch 3, **dadurch gekennzeichnet, dass** die zumindest zwei Abstandsabschnitte (132, 134) zur Anordnung von Befestigungsmitteln ausgebildet sind.

5. Fahrrad (1) gemäß Anspruch 4, **dadurch gekennzeichnet, dass** die zumindest zwei Abstandsabschnitte (132, 134) Durchgangsbohrungen für Schrauben (136) aufweisen.

6. Fahrrad (1) gemäß einem oder mehreren der vorangegangenen Ansprüche, **dadurch gekennzeichnet, dass** das Fahrrad (1) einen Transportbehälter (8) aufweist, der an dem Längsträger (2) befestigbar ist.

7. Fahrrad (1) gemäß Anspruch 6, **dadurch gekennzeichnet, dass** das Fahrrad (1) eine Halterung (9) für den Transportbehälter (8) aufweist, wobei die Halterung (9) benachbart und/oder zumindest teilweise oberhalb der Aufnahme (7) am Längsträger (2) angeordnet ist.

8. Fahrrad (1) gemäß einem oder mehreren der vorangegangenen Ansprüche, **dadurch gekennzeichnet, dass** das Fahrrad (1) zwei Hinterradstoßdämpfer (10) aufweist, wobei die Hinterräder (4) jeweils unabhängig voneinander mittels der Hinterradstoßdämpfer (10) in Bezug auf den Längsträger (2) gedämpft sind.

9. Fahrrad (1) gemäß einem oder mehreren der vorangegangenen Ansprüche, **dadurch gekennzeichnet, dass** das Fahrrad (1) zwei Vorderräder (11) aufweist.

10. Fahrrad (1) gemäß Anspruch 9, **dadurch gekennzeichnet, dass** das Fahrrad (1) mindestens zwei Vorderradlager (12) aufweist, wobei die zwei Vorderräder (11) jeweils mittels eines Vorderradlagers (12) voneinander und vom Längsträger (2) axial beabstandet und unabhängig voneinander gelenkig am Längsträger (2) angeordnet sind.

11. Fahrrad (1) gemäß Anspruch 10, **dadurch gekennzeichnet, dass** das Fahrrad (1) eine Lenkeinrichtung (13) aufweist, wobei die Lenkeinrichtung (13) zur Übertragung von Lenkbewegungen eines Fahrradfahrers mit den Vorderradlagern (12) in Wirkverbindung steht.

12. Fahrrad (1) gemäß einem oder mehreren der vorangegangenen Ansprüche 9 bis 11, **dadurch gekennzeichnet, dass** das Fahrrad (1) zumindest zwei Vorderradstoßdämpfer (14) aufweist, wobei die Vorderräder (11) jeweils unabhängig voneinander mittels eines Vorderradstoßdämpfers (14) in Bezug auf den Längsträger (2) gedämpft sind.

13. Fahrrad (1) gemäß einem oder mehreren der vorangegangenen Ansprüche, **dadurch gekennzeichnet, dass** das Fahrrad (1) einen Motor (15) aufweist.

14. Fahrrad (1) gemäß Anspruch 13, **dadurch gekennzeichnet, dass** der Motor (15) als Elektro-Motor ausgebildet ist.

15. Fahrrad (1) gemäß Anspruch 14, **dadurch gekennzeichnet, dass** der Elektro-Motor (15) als Pedelec-Antrieb ausgebildet ist.

16. Fahrrad (1) gemäß einem oder mehreren der vorangegangenen Ansprüche, **dadurch gekennzeichnet, dass** das Fahrrad (1) eine Treteinrichtung (17) aufweist, die modulartig am Fahrrad (1) befestigbar ist.

17. Fahrrad (1) gemäß einem oder mehreren der vorangegangenen Ansprüche, **dadurch gekennzeichnet, dass** das Zahnrad (3) als Zahnradscheibe für einen Zahnriemen (19) ausgebildet ist.

18. Rahmenkonstruktion (16) für ein mehrspuriges Fahrrad (1) umfassend mindestens einen Längsträger (2), ein Zahnrad (3), zwei Hinterradlager (5), zwei Antriebswellen (6) und eine Aufnahme (7), wobei Hinterräder (4) mittels der zwei Hinterradlager (5) voneinander und vom Längsträger (2) axial beabstandet und unabhängig voneinander gelenkig am Längsträger (2) anordenbar sind, wobei die Antriebswellen (6) als Gelenkwellen ausgebildet sind, und wobei mittels der Aufnahme (7) das Zahnrad (3), die zwei Antriebswellen (6) und die zwei Hinterradlager (5) am Längsträger (2) angeordnet sind, wobei die Rahmenkonstruktion (16) eine Vorderradradaufnahme (21, 121) aufweist, wobei mittels der Vorderradaufnahme (21, 121) zumindest zwei Vorderradlager (12, 112) und/oder zumindest zwei Vorderradstoßdämpfer (14, 114) am Längsträger (2) angeordnet sind, **dadurch gekennzeichnet, dass** die Vorderradaufnahme (21, 121) zumindest einen Abschnitt aufweist, der den Längsträger (2) umfänglich umschließt, wobei der Abschnitt als Manschette beziehungsweise Klemme (114) ausgebildet ist.

19. Rahmenkonstruktion (16) gemäß Anspruch 18, **dadurch gekennzeichnet, dass** die Manschette (114) ein Oberteil (116) und ein Unterteil (118) mit jeweils einem Basisabschnitt (119) mit einer Oberseite (120) und zumindest zwei sich von einer Unterseite (121) des Basisabschnitts (119) in einem rechten Winkel wegerstreckenden Seitenabschnitten (122, 124) umfasst.

20. Rahmenkonstruktion (16) gemäß Anspruch 19, **dadurch gekennzeichnet, dass** der Basisabschnitt (119) zumindest zwei seitliche Abstandsabschnitte (132, 134) umfasst, die den Basisabschnitt (119) seitlich verbreitern und seitlich vom Längsträger (2) überstehen.

21. Rahmenkonstruktion (16) gemäß Anspruch 20, **dadurch gekennzeichnet, dass** die zumindest zwei Abstandsabschnitte (132, 134) zur Anordnung von Befestigungsmitteln ausgebildet sind.

22. Rahmenkonstruktion (16) gemäß Anspruch 21, **dadurch gekennzeichnet, dass** die zumindest zwei Abstandsabschnitte (132, 134) Durchgangsbohrungen für Schrauben (136) aufweisen.

23. Rahmenkonstruktion (16) gemäß einem oder mehreren der Ansprüche 18 bis 22, **dadurch gekennzeichnet, dass** die Rahmenkonstruktion (16) einen Transportbehälter (8) aufweist, der an dem Längsträger (2) befestigbar ist.

24. Rahmenkonstruktion (16) gemäß Anspruch 23, **dadurch gekennzeichnet, dass** die Rahmenkonstruktion (16) eine Halterung (9) für den Transportbehälter (8) aufweist, wobei die Halterung (9) benachbart und/oder zumindest teilweise oberhalb der Aufnahme (7) angeordnet ist.

25. Rahmenkonstruktion (16) gemäß einem oder mehreren der vorangegangenen Ansprüche 18 bis 24, **dadurch gekennzeichnet, dass** die Rahmenkonstruktion (16) zwei Hinterradstoßdämpfer (10) aufweist, um zwei Hinterräder (4) jeweils unabhängig voneinander in Bezug auf den Längsträger (2) zu dämpfen.

26. Rahmenkonstruktion (16) gemäß einem oder mehreren der vorangegangenen Ansprüche 18 bis 25, **dadurch gekennzeichnet, dass** die Rahmenkonstruktion (16) mindestens zwei Vorderradlager (12) aufweist, um zwei Vorderräder (11) jeweils voneinander und vom Längsträger (2) axial beabstandet und unabhängig voneinander gelenkig am Längsträger (2) anzuordnen.

27. Rahmenkonstruktion (16) gemäß Anspruch 26, **dadurch gekennzeichnet, dass** die Rahmenkonstruktion (16) eine Lenkeinrichtung (13) aufweist, wobei die Lenkeinrichtung (13) zur Übertragung von Lenkbewegungen eines Fahrradfahrers mit den Vorderradlagern (12) in Wirkverbindung steht.

28. Rahmenkonstruktion (16) gemäß einem oder mehreren der vorangegangenen Ansprüche 18 bis 27, **dadurch gekennzeichnet, dass** die Rahmenkonstruktion (16) zumindest zwei Vorderradstoßdämpfer (14) aufweist, um zwei Vorderräder (11) jeweils unabhängig voneinander in Bezug auf den Längsträger (2) zu dämpfen.

## Claims

1. Multitrack bicycle (1) comprising at least one longitudinal member (2), a gearwheel (3), two rear wheels (4), two rear wheel bearings (5), two drive shafts (6) and a receptacle (7), wherein the rear wheels (4) are axially spaced apart from one another and from the longitudinal member (2) by means of the two rear wheel bearings (5) and are arranged on the longitudinal member (2) in an articulated manner independently of one another, the drive shafts (6) each being operatively connected both to the gearwheel (3) and to a rear wheel (4) and being designed as cardan shafts, and the gearwheel (3), the two drive shafts (6) and the two rear wheel bearings (5) being arranged on the longitudinal member (2) by means of the receptacle (7), the bicycle (1) having a front wheel receptacle (21, 121), wherein at least two front wheel bearings (12, 112) and/or at least two front wheel shock absorbers (14, 114) are arranged on the longitudinal member (2) by means of the front wheel receptacle (21, 121),
**characterized in that**
the front wheel receptacle (21, 121) has at least one section which circumferentially encompasses the longitudinal member (2), and the section being designed as a sleeve or clamp (114).

2. Bicycle (1) according to claim 1, **characterized in that** the sleeve (114) comprises an upper part (116) and a lower part (118) each having a base portion (119) with an upper side (120) and at least two side portions (122, 124) extending at right angles away from a lower side (121) of the base portion (119).

3. Bicycle (1) according to claim 2, **characterized in that** the base portion (119) comprises at least two lateral spacing sections (132, 134) which widen the base portion (119) laterally and project laterally from the longitudinal member (2).

4. Bicycle (1) according to claim 3, **characterized in that** the at least two spacing sections (132, 134) are formed for the arrangement of fastening means.

5. Bicycle (1) according to claim 4, **characterized in that** the at least two spacing sections (132, 134) have through-holes for screws (136).

6. Bicycle (1) according to one or more of the preceding claims, **characterized in that** the bicycle (1) comprises a transport container (8) which can be attached to the longitudinal member (2).

7. Bicycle (1) according to claim 6, **characterized in that** the bicycle (1) has a holder (9) for the transport container (8), the holder (9) being arranged adjacent and/or at least partially above the receptacle (7) on the longitudinal member (2).

8. Bicycle (1) according to one or more of the preceding claims, **characterized in that** the bicycle (1) comprises two rear wheel shock absorbers (10), the rear wheels (4) each being independently damped with respect to the longitudinal member (2) by means of the rear wheel shock absorbers (10).

9. Bicycle (1) according to one or more of the preceding claims, **characterized in that** the bicycle (1) has two front wheels (11).

10. Bicycle (1) according to claim 9, **characterized in that** the bicycle (1) comprises at least two front wheel bearings (12), wherein the two front wheels (11) are each axially spaced from one another and from the longitudinal member (2) by means of a front wheel bearing (12) and are arranged independently of each other articulately on the longitudinal member (2).

11. Bicycle (1) according to claim 10, **characterized in that** the bicycle (1) has a steering device (13), the steering device (13) being operatively connected to the front wheel bearings (12) for transmitting steering movements of a cyclist.

12. Bicycle (1) according to one or more of the preceding claims 9 to 11, **characterized in that** the bicycle (1) comprises at least two front shock absorbers (14), the front wheels (11) each being independently damped with respect to the longitudinal member (2) by means of a front wheel shock absorber (14).

13. Bicycle (1) according to one or more of the preceding claims, **characterized in that** the bicycle (1) comprises a motor (15).

14. Bicycle (1) according to claim 13, **characterized in that** the motor (15) is designed as an electric motor.

15. Bicycle (1) according to claim 14, **characterized in that** the electric motor (15) is designed as a pedelec drive.

16. Bicycle (1) according to one or more of the preceding claims, **characterized in that** the bicycle (1) has a pedal device (17) which can be fastened modularly to the bicycle (1).

17. Bicycle (1) according to one or more of the preceding claims, **characterized in that** the gear wheel (3) is designed as a gear pulley for a toothed belt (19).

18. Frame construction (16) for a multitrack bicycle (1) comprising at least one longitudinal member (2), a gearwheel (3), two rear wheel bearings (5), two drive shafts (6) and a receptacle (7), wherein rear wheels (4) are axially spaced apart from one another and from the longitudinal member (2) by means of the two rear wheel bearings (5) and can be arranged on the longitudinal member (2) in an articulated manner independently of one another, the drive shafts (6) being designed as cardan shafts, and the gearwheel (3), the two drive shafts (6) and the two rear wheel bearings (5) being arranged on the longitudinal member (2) by means of the receptacle (7), the frame construction (16) having a front wheel receptacle (21, 121), wherein at least two front wheel bearings (12, 112) and/or at least two front wheel shock absorbers (14, 114) are arranged on the longitudinal member (2) by means of the front wheel receptacle (21, 121),
**characterized in that**
the front wheel receptacle (21, 121) has at least one section which circumferentially encompasses the longitudinal member (2), the section being designed as a sleeve or clamp (114).

19. Frame construction (16) according to claim 18, **characterized in that** the sleeve (114) comprises an upper part (116) and a lower part (118) each having a base portion (119) with an upper side (120) and at least two side portions (122, 124) extending at right angles away from a lower side (121) of the base portion (119).

20. Frame construction (16) according to claim 19, **characterized in that** the base portion (119) comprises at least two lateral spacing sections (132, 134) which widen the base portion (119) laterally and project laterally from the longitudinal member (2).

21. Frame construction (16) according to claim 20, **characterized in that** the at least two spacing sections (132, 134) are formed for the arrangement of fastening means.

22. Frame structure (16) according to claim 21, **characterized in that** the at least two spacing sections (132, 134) have through-holes for screws (136).

23. Frame structure (16) according to one or more of claims 18 to 22, **characterized in that** the frame structure (16) comprises a transport container (8) which can be attached to the longitudinal member (2).

24. Frame construction (16) according to claim 23, **characterized in that** the frame construction (16) has a holder (9) for the transport container (8), the holder (9) being arranged adjacent and/or at least partially above the receptacle (7).

25. Frame structure (16) according to one or more of the preceding claims 18 to 24, **characterized in that** the frame structure (16) comprises two rear wheel shock absorbers (10) in order to damp two rear wheels (4) each independently of one another with respect to the longitudinal member (2).

26. Frame construction (16) according to one or more of the preceding claims 18 to 25, **characterized in that** the frame construction (16) comprises at least two front wheel bearings (12), in order to arrange two front wheels (11) each axially spaced from one another and from the longitudinal member (2) and independently of each other in an articulated manner on the longitudinal member (2).

27. Frame construction (16) according to claim 26, **characterized in that** the frame construction (16) has a steering device (13), the steering device (13) being operatively connected to the front wheel bearings (12) for transmitting steering movements of a cyclist.

28. Frame construction (16) according to one or more of the preceding claims 18 to 27, **characterized in that** the frame construction (16) comprises at least two front shock absorbers (14) in order to damp two front wheels (11) each independently of one another with respect to the longitudinal member (2).

## Revendications

1. Bicyclette multipiste (1) comprenant au moins une poutre longitudinale (2), une roue dentée (3), deux roues arrière (4), deux paliers de roue arrière (5), deux arbres d'entraînement (6) et un réceptacle (7), sur laquelle les roues arrière (4) sont écartées axialement entre elles et par rapport à la poutre longitudinale (2) par les deux paliers de roue arrière (5) et sont articulées indépendamment l'une de l'autre sur la poutre longitudinale (2), sur laquelle les arbres d'entraînement (6) sont chacun en liaison active aussi bien avec la roue dentée (3) qu'avec une roue arrière (4) et sont configurés comme des arbres articulés, et sur laquelle la roue dentée (3), les deux arbres d'entraînement (6) et les deux paliers de roue arrière (5) sont montés sur la poutre longitudinale (2) par le biais du réceptacle (7), cette bicyclette (1) présentant un réceptacle de roues avant (21, 121) par le biais duquel au moins deux paliers de roue avant (12, 112), et/ou au moins deux amortisseurs de roue avant (14, 114) sont montés sur la poutre longitudinale (2),
**caractérisée en ce que**
le réceptacle de roues avant (21, 121) présente au moins un segment qui entoure la périphérie de la poutre longitudinale (2), ce segment étant configuré comme un manchon ou comme une pince (114).

2. Bicyclette (1) selon la revendication 1, **caractérisée en ce que** le manchon (114) comprend une partie supérieure (116) et une partie inférieure (118) avec chacune un segment de base (119) doté d'une face supérieure (120) et au moins deux segments latéraux (122, 124) s'écartant à angle droit d'une face inférieure (121) du segment de base (119).

3. Bicyclette (1) selon la revendication 2, **caractérisée en ce que** le segment de base (119) comprend au moins deux segments d'espacement latéraux (132, 134) qui élargissent latéralement le segment de base (119) et s'écartent latéralement de la poutre longitudinale (2).

4. Bicyclette (1) selon la revendication 3, **caractérisée en ce que** les au moins deux segments d'espacement (132, 134) sont configurés pour permettre le montage de moyens de fixation.

5. Bicyclette (1) selon la revendication 4, **caractérisée en ce que** les au moins deux segments d'espacement (132, 134) présentent des trous de passage pour des vis (136).

6. Bicyclette (1) selon une ou plusieurs des revendications précédentes, **caractérisée en ce qu'**elle possède un conteneur de transport (8) qui peut être fixé sur la poutre longitudinale (2).

7. Bicyclette (1) selon la revendication 6, **caractérisée en ce qu'**elle possède une fixation (9) pour le conteneur de transport (8), cette fixation (9) étant montée sur la poutre longitudinale (2) en position adjacente et/ou au moins partiellement au-dessus du réceptacle (7).

8. Bicyclette (1) selon une ou plusieurs des revendications précédentes, **caractérisée en ce qu'**elle possède deux amortisseurs de roue arrière (10), les roues arrière (4) étant amorties indépendamment l'une de l'autre au moyen des amortisseurs de roue arrière (10) par rapport à la poutre longitudinale (2).

9. Bicyclette (1) selon une ou plusieurs des revendications précédentes, **caractérisée en ce qu'**elle possède deux roues avant (11).

10. Bicyclette (1) selon la revendication 9, **caractérisée en ce qu'**elle possède au moins deux paliers de roue avant (12), les deux roues avant (11) étant écartées axialement entre elles et par rapport à la poutre longitudinale (2) chacune par un palier de roue avant (12) et étant articulées indépendamment l'une de l'autre sur la poutre longitudinale (2).

11. Bicyclette (1) selon la revendication 10, **caractérisée en ce qu'**elle possède un dispositif de direction (13), ce dispositif de direction (13) étant en liaison active avec les paliers de roue avant (12) pour transmettre les mouvements de direction d'un cycliste.

12. Bicyclette (1) selon une ou plusieurs des revendications précédentes 9 à 11, **caractérisée en ce qu'**elle possède au moins deux amortisseurs de roue avant (14), les deux roues avant (11) étant amorties indépendamment l'une de l'autre chacune au moyen d'un amortisseur de roue avant (14) par rapport à la poutre longitudinale (2).

13. Bicyclette (1) selon une ou plusieurs des revendications précédentes, **caractérisée en ce qu'**elle possède un moteur (15).

14. Bicyclette (1) selon la revendication 13, **caractérisée en ce que** le moteur (15) est un moteur électrique.

15. Bicyclette (1) selon la revendication 14, **caractérisée en ce que** le moteur électrique (15) est un système d'entraînement Pedelec.

16. Bicyclette (1) selon une ou plusieurs des revendications précédentes, **caractérisée en ce qu'**elle possède un dispositif de pédalage (17) qui peut être fixé de manière modulaire sur la bicyclette (1).

17. Bicyclette (1) selon une ou plusieurs des revendications précédentes, **caractérisée en ce que** la roue dentée (3) est configurée comme un disque de roue dentée pour une courroie crantée (19).

18. Structure de cadre (16) destiné à une bicyclette (1) comprenant au moins une poutre longitudinale (2), une roue dentée (3), deux paliers de roue arrière (5), deux arbres d'entraînement (6) et un réceptacle (7), sur laquelle les roues arrière (4) sont écartées axialement entre elles et par rapport à la poutre longitudinale (2) par les deux paliers de roue arrière (5) et sont articulées indépendamment l'une de l'autre sur la poutre longitudinale (2), sur laquelle les arbres d'entraînement (6) sont configurés comme des arbres articulés, et sur laquelle la roue dentée (3), les deux arbres d'entraînement (6) et les deux paliers de roue arrière (5) sont montés sur la poutre longitudinale (2) par le biais du réceptacle (7), cette structure de cadre (16) présentant un réceptacle de roues avant (21, 121) par le biais duquel au moins deux paliers de roue avant (12, 112), et/ou au moins deux amortisseurs de roue avant (14, 114) sont montés sur la poutre longitudinale (2), **caractérisée en ce que** le réceptacle de roues avant (21, 121) présente au moins un segment qui entoure la périphérie de la poutre longitudinale (2), ce segment étant configuré comme un manchon ou comme une pince (114).

19. Structure de cadre (16) selon la revendication 18, **caractérisée en ce que** le manchon (114) comprend une partie supérieure (116) et une partie inférieure (118) avec chacune un segment de base (119) doté d'une face supérieure (120) et au moins deux segments latéraux (122, 124) s'écartant à angle droit d'une face inférieure (121) du segment de base (119).

20. Structure de cadre (16) selon la revendication 19, **caractérisée en ce que** le segment de base (119) comprend au moins deux segments d'espacement latéraux (132, 134) qui élargissent latéralement le segment de base (119) et s'écartent latéralement de la poutre longitudinale (2).

21. Structure de cadre (16) selon la revendication 20, **caractérisée en ce que** les au moins deux segments d'espacement (132, 134) sont configurés pour permettre le montage de moyens de fixation.

22. Structure de cadre (16) selon la revendication 21, **caractérisée en ce que** les au moins deux segments d'espacement (132, 134) présentent des trous de passage pour des vis (136).

23. Structure de cadre (16) selon une ou plusieurs des revendications 18 à 22, **caractérisée en ce qu'**elle possède un conteneur de transport (8) qui peut être fixé sur la poutre longitudinale (2).

24. Structure de cadre (16) selon la revendication 23, **caractérisée en ce qu'**elle possède une fixation (9) pour le conteneur de transport (8), cette fixation (9) étant montée en position adjacente et/ou au moins partiellement au-dessus du réceptacle (7).

25. Structure de cadre (16) selon une ou plusieurs des revendications précédentes 18 à 24, **caractérisée en ce qu'**elle possède deux amortisseurs de roue arrière (10) pour amortir les deux roues arrière (4) indépendamment l'une de l'autre par rapport à la poutre longitudinale (2).

26. Structure de cadre (16) selon une ou plusieurs des revendications précédentes 18 à 25, **caractérisée en ce qu'**elle possède au moins deux paliers de roue avant (12) pour monter de manière articulée et indépendamment l'une de l'autre sur la poutre longitudinale (2) les deux roues avant (11) écartées axialement entre elles et par rapport à la poutre longitudinale (2).

27. Structure de cadre (16) selon la revendication 26, **caractérisée en ce qu'**elle possède un dispositif de direction (13), ce dispositif de direction (13) étant en liaison active avec les paliers de roue avant (12) pour transmettre les mouvements de direction d'un cycliste.

28. Structure de cadre (16) selon une ou plusieurs des revendications précédentes 18 à 27, **caractérisée en ce qu'**elle possède au moins deux amortisseurs de roue avant (14) pour amortir les deux roues avant (11) indépendamment l'une de l'autre par rapport à la poutre longitudinale (2).
